# EUROPÄISCHE PATENTSCHRIFT

(11) **EP 1 000 408 B1**
(45) Veröffentlichungstag und Bekanntmachung des Hinweises auf die Patenterteilung: **07.08.2002**
(21) Anmeldenummer: 99900068.0
(22) Anmeldetag: 12.01.1999
(51) Int. Cl.: G06T 11/00

(54) **COMPUTERTOMOGRAPHIE-VERFAHREN MIT HELIXFÖRMIGER ABTASTUNG EINES UNTERSUCHUNGSBEREICHS**
COMPUTER TOMAGRAPHY METHOD WITH HELICAL SCANNING OF AN EXAMINATION AREA
PROCEDE DE TOMOGRAPHIE AVEC BALAYAGE HELICOIDAL D'UNE ZONE D'EXAMEN

(30) Priorität: 13.01.1998 WO PCT/SE98/00029
(43) Veröffentlichungstag der Anmeldung: 17.05.2000
(73) Patentinhaber: Koninklijke Philips Electronics N.V., 5621 BA Eindhoven (NL)
(72) Erfinder: DANIELSSON, Per-Erik, NL-5656 AA Eindhoven (NL)
(74) Vertreter: Hartmann, Heinrich, Dipl.-Ing.
(86) Internationale Anmeldenummer: IB9900027
(87) Internationale Veröffentlichungsnummer: WO9936885

(56) Entgegenhaltungen:
- EP-A- 0 773 042
- WO-A-98/30980
- US-A- 5 257 183
- US-A- 5 390 112
- WU C ET AL: "ANALYTIC RECONSTRUCTION FOR HELICAL-ORBIT CONE-BEAM SPECT" RECORD OF THE NUCLEAR SCIENCE SYMPOSIUM AND MEDICAL IMAGING CONFERE, SAN FRANCISCO, OCT. 30 - NOV. 6, 1993, Bd. 3, 30. Oktober 1993, Seiten 1510-1514, XP000462618 INSTITUTE OF ELECTRICAL AND ELECTRONICS ENGINEERS
- KUDO H ET AL: "Feasible cone beam scanning methods for exact reconstruction in three-dimensional tomography" JOURNAL OF THE OPTICAL SOCIETY OF AMERICA A (OPTICS AND IMAGE SCIENCE), DEC. 1990, USA, Bd. 7, Nr. 12, Seiten 2169-2183, XP002102879 ISSN 0740-3232
- KUDO H ET AL: "Cone-beam filtered-backprojection algorithm for truncated helical data" PHYSICS IN MEDICINE AND BIOLOGY, OCT. 1998, IOP PUBLISHING, UK, Bd. 43, Nr. 10, Seiten 2885-2909, XP002102880 ISSN 0031-9155
- SCHALLER S. ET AL: 'A new Approximate Algorithm for Image Reconstruction in Cone-Beam Spiral CT at Small Cone-Angles' IEEE NUCLEAR SCIENCE SYMPOSIUM 1996, ANAHEIM CA, Seiten 1703 - 1709
- SCHALLER S. ET AL: 'New, efficient Fourier-reconstruction method for approximate image reconstruction in spiral cone-beam CT at small cone angles' PROC. OF SPIE MED. IMAGING CONFERENCE 22 Februar 1997 - 28 Februar 1997, NEWPORT BEACH CA, Seiten 213 - 224

## Beschreibung

Die Erfindung bezieht sich auf ein Computertomographie-Verfahren nach dem Oberbegriff des Anspruchs 1 und auf einen Computertomographen nach dem Oberbegriff des Anspruchs 4

Ein derartiges Verfahren und ein derartiger Computertomograph sind aus der DE-OS 195 45 778 (Tam) bekannt. Mit diesem bekannten Verfahren ist es möglich, einen in Richtung der Rotationsachse ausgedehnten Untersuchungsbereich mit einem kegelförmigen Strahlenbündel (cone beam) abzutasten und die Absorptionsverteilung in dem Untersuchungsbereich auch dann zu rekonstruieren, wenn das darin enthaltene Objekt - beispielsweise ein Patient - länger ist als der Teil des Untersuchungsbereichs, für den Daten akquiriert worden sind.

Voraussetzung für dieses Verfahren ist allerdings, daß die sogenannte "region of interest" (ROI) zuvor festgelegt wird und daß am Anfang und am Ende der ROI (bezogen auf die Rotationsrichtung) zusätzlich eine Abtastung des Untersuchungsbereichs auf einer kreisförmigen, zur Rotationsachse senkrechten Bahn erfolgt. Erst wenn die Abtastung des Untersuchungsbereichs beendet ist, kann die Rekonstruktion der Absorptionsverteilung beginnen. Der Übergang von einer kreisförmigen zu einer helixförmigen und von dieser wieder zu einer kreisförmigen Abtastung des Untersuchungsbereichs erfordert eine ruckartige Beschleunigung bzw. Verzögerung entweder der Abtasteinheit oder des Objekts in dem Untersuchungsbereich, was Unschärfen zur Folge haben kann. Von Nachteil ist weiterhin, daß der Abtastbereich schon vorher festgelegt werden muß.

Aufgabe der vorliegenden Erfindung ist es daher, ein Verfahren der eingangs genannten Art anzugeben, das keine zusätzliche kreisförmige Abtastbewegung erfordert und die Rekonstruktion schon während der Akquisition der Messdaten möglich macht. Diese Aufgabe wird bei einem Verfahren der eingangs genannten Art gelöst durch die im Anspruch 1 angegebenen Maßnahmen.

Bei der Erfindung werden nur Messdaten verwendet, bei deren Akquisition die Strahlenquelle die Punkte innerhalb des Untersuchungsbereichs aus einem Winkelbereich von exakt 180° - vom jeweiligen Punkt aus gesehen - bestrahlt; die zu den Messdaten gehörigen Strahlen durchsetzen dann genau den Bereich zwischen zwei benachbarten Windungen der Helix. Dieser Bereich ist einerseits ausreichend, um eine exakte Rekonstruktion zu ermöglichen und vermeidet andererseits die Benutzung von redundanten Messdaten.

Wesentlich ist in Verbindung mit diesen Messdaten die Art des vorgenommenen Rebinnings (unter "Rebinning" wird das Umsortieren der Messdaten aus ihrer sich aus der Akquisition ergebenden Folge verstanden sowie das Uminterpolieren der Messdaten auf ein anderes Raster). Durch das Rebinning werden die nachfolgenden Verarbeitungsschritte - das vorzugsweise eindimensionale Filtern und die Rekonstruktion - ganz wesentlich erleichtert. Durch das Filtern von Daten, die jeweils zu Strahlen aus zueinander und zur Rotationsachse parallelen Ebenen gehören, kann auf eine Gewichtung mit geeignet gewählten Gewichtungsfaktoren (die vom Detektortyp und von der Art des Rebinning abhängen) verzichtet werden. Vor allem ergibt sich dadurch eine hervorragende Bildqualität.

Es sei an dieser Stelle darauf hingewiesen, daß aus der US-PS 5,390,112 (Tam) ein CT-Verfahren (CT=Computertomograhie) mit helixförmiger Abtastbewegung und kegelförmigem Strahlenbündel bekannt ist, bei dem lediglich solche Messdaten für die Rekonstruktion verwendet werden, die gerade den Bereich zwischen zwei benachbarten Windungen der Helix durchsetzen. Um daraus die Absorption im Untersuchungsbereich zu rekonstruieren, werden aus den Meßwerten Flächenintegrale ermittelt, die einer inversen Radon-Transformation unterzogen werden.

Weiterhin ist aus einer Veröffentlichung von Schaller et al in SPIE, Vol. 3032, Seiten 213 bis 224, bereits ein CT-Verfahren, mit helixförmiger Abtastbewegung und kegelförmigem Strahlenbündel bekannt, bei dem - für jede Detektorzeile getrennt - ein Rebinning der Messdaten und der zugehörigen Strahlen zu schräg parallelen Projektionen erfolgt. Wegen ihres schrägen Verlaufs in Bezug auf eine zur Rotationsachse parallele Ebene eignen sich diese aber nicht für eine parallele Rückprojektion. Deshalb wird die Absorptionsverteilung in einer solchen Ebene mit Hilfe sog. "generalisierter Projektionen" rekonstruiert, wobei zunächst Strahlen aus zueinander und zur Rotationsachse parallelen Ebenen auf diese Ebene projiziert werden und wobei die diesen Projektionen zugeordneten Werte - abweichend vom Üblichen - entlang der Projektionen variieren. Das weitere Verfahren ist sehr aufwendig und muß für andere zur Rotationsachse senkrechte Ebenen jeweils wiederholt werden, wenn die Absorption in einem dreidimensionalen Bereich rekonstruiert werden soll.

Die Filterung gemäß Schritt c) in Anspruch 1 könnte beispielsweise auch dadurch durchgeführt werden, dass die durch das Rebinning erzeugten Daten einer Faltung (Konvolution) mit einem geeigneten Filterkernel unterzogen werden. Die in Anspruch 2 definierte Filterung benötigt demgegenüber weniger Rechenzeit.

Mit der weiteren Ausgestaltung nach Anspruch 3 erfolgt das Rebinning für jede Gruppe dabei an einem virtuellen Detektor, der zu den zu dieser Gruppe gehörenden Ebenen senkrecht steht und eine rechteckige Fläche hat. Dies erleichtert die für die nachfolgenden Verarbeitungsschritte erforderliche Uminterpolation auf ein äquidistantes Messpunktgitter erheblich.

Anspruch 4 beschreibt einen Computertomographen zur Durchführung des erfindungsgemäßen Verfahrens, wobei Anspruch 5 eine vorteilhafte Ausgestaltung definiert. Bei dieser Ausgestaltung ist durch die Form der Kollimatoranordnung und/oder durch die Form der Detektoreinheit sichergestellt, dass jeder Punkt innerhalb des Untersuchungsbereichs die Strahlenquelle beim Austritt aus dem von dieser erzeugten Strahlenbündel unter einem Winkel "sieht" der gegenüber dem Winkel beim Eintritt in das Strahlenbündel um exakt 180° (π) versetzt ist. Der Vorteil dieser Maßnahme besteht darin, daß alle Messdaten - und nur diese Messdaten - gemessen werden, die für eine exakte Rekonstruktion erforderlich sind. Ein Aussortieren oder ein Mitgewichten redundanter Messdaten ist dabei nicht nötig.

Die Erfindung wird nachstehend anhand der Zeichnungen näher erläutert. Es zeigen:
Fig. 1 einen erfindungsgemäßen Computertomographen in schematischer Darstellung,
Fig. 2 die helixförmige Abtastbahn, welche die Abtasteinheit und ein im Untersuchungsbereich befindliches Objekt relativ zueinander beschreibt,
Fig. 3 die Abtasteinheit und dcn Untersuchungsbereich in perspektivischer Darstellung,
Fig. 4 eine Draufsicht auf Fig. 3,
Fig. 5 eine Abwicklung der Detektoreinheit,
Fig. 6 verschiedene Möglichkeiten für die Anordnung der Detektoreinheit,
Fig. 7 die Abwicklung einer auf einem Zylinder um die Strahlenquelle befindlichen Detektoreinheit
Fig. 8 eine perspektivische Darstellung von Strahlenfächern, die einer Gruppe "rebinned" Daten zugeordet sind ,
Fig. 9 ein Ablaufdiagramm zur Verarbeitung der Messdaten,
Fig. 10 eine Seitenansicht der Detektoreinheit mit einigen Strahlen,
Fig. 11 eine Draufsicht auf die Anordnung nach Fig. 10,
Fig.12 die gleiche Ansicht wie Fig. 11, jedoch nach einem teilweisen Rebinning von Messdaten.

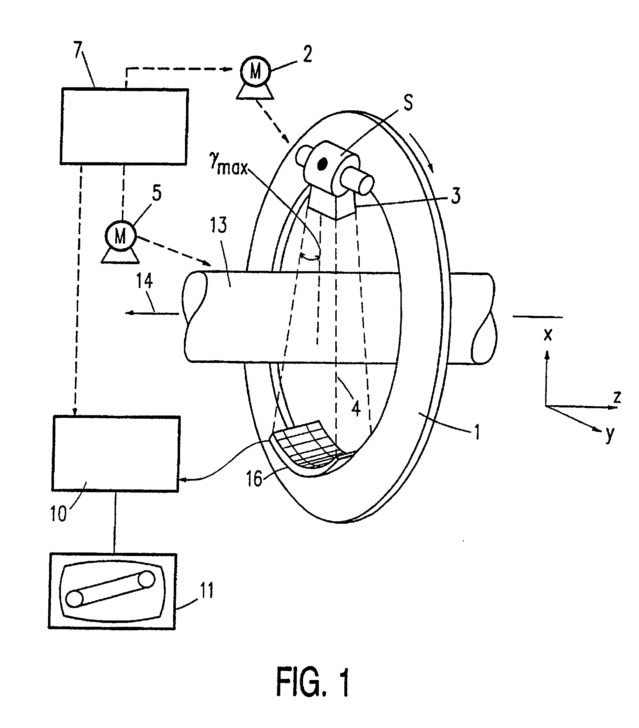

Der in Fig. 1 dargestellte Computertomograph umfaßt eine Gantry 1, die um eine parallel zur z-Richtung verlaufende Rotationsachse 14 rotieren kann. Dazu wird die Gantry von einem Motor 2 mit einer vorzugsweise konstanten Winkelgeschwindigkeit angetrieben. An der Gantry ist eine Strahlenquelle S, beispielsweise eine Röntgenröhre befestigt, die mit einer Kollimatoranordnung 3 versehen ist, die aus der von der Strahlenquelle S erzeugten Strahlung ein kegelförmiges Strahlenbündel 4 ausblendet, d.h. ein Strahlenbündel, das sowohl in Richtung der z-Achse als auch in einer dazu senkrechten Richtung (d.h. in der x-y - Ebene des in Fig. 1 dargestellten kartesischen Koordinatensystems) eine endliche Ausdehnung hat.

Das Strahlenbündel durchdringt einen Untersuchungsbereich 13 bzw. - nicht näher dargestellt - ein Objekt, z.B. einen Patienten, auf einem Patientenlagerungstisch. Nach dem Durchsetzen des Untersuchungsbereichs 13 trifft das Röntgenstrahlenbündel 4 auf eine an der Gantry 1 befestigte zweidimensionale Detektoreinheit 16, die mehrere Detektorzeilen mit jeweils einer Vielzahl von Detektorelementen umfasst. Jedes Detekorelement erfasst in jeder Strahlenquellen-Position einen Strahl aus dem Strahlenbündel 4. Die Detektoreinheit 16 kann auf einem Kreisbogen angeordnet sein, der mit der kreisförmigen Bahn der Strahlenquelle S bei der Rotation zusammenfällt.

Der mit γₘₐₓ bezeichnete Öffnungswinkel des Strahlenbündels 4 (als Öffnungswinkel ist der Winkel bezeichnet, den ein in der x-y- Ebene am Rande liegender Strahl des Bündels 4 mit dem die Rotationsachse 14 senkrecht schneidenden Strahl beschreibt) bestimmt dabei den Durchmesser des zur Rotationsachse 14 konzentrischen Untersuchungsbereichs 13, innerhalb dessen das zu untersuchende Objekt sich bei der Akquisition der Messwerte mit der Detektoreinheit befinden muss. Der Untersuchungsbereich 13 - bzw. der darin beispielsweise auf einem Patientenlagerungstisch befindliche Patient kann mittels eines Motors 5 parallel zur Richtung der Rotationsachse 14 bzw. zur z-Achse verschoben werden. Die dabei von der Detektoreinheit 16 akquirierten Messdaten werden einem Bildverarbeitungsrechner 10 zugeführt, der daraus die Verteilung der Absorption der emittierten Strahlung in dem von dem Strahlenkegel 4 erfassten Teil des Untersuchungsbereichs 13 ermittelt und z.B. auf einem Monitor 11 wiedergibt. Die beiden Motoren 2 und 5, der Bildverarbeitungsrechner 10, die Strahlenquelle S und der Transfer der Messdaten von der Detektoreinheit 16 zum Bildverabeitungsrechner 10 werden von einer geeigneten Kontrolleinheit 7 gesteuert.

Die Kontrolleinheit 7 steuert die Motoren 2 und 5 so, dass das Verhältnis der Geschwindigkeit v des Untersuchungsbereichs 13 und die Winkelgeschwindigkeit der Gantry 1 in einem konstanten Verhältnis stehen. In diesem Fall bewegen sich die Strahlenquelle S und der Untersuchungsbereich relativ zueinander über eine helixförmige Bahn. Im Prinzip ist es dabei gleichgültig, ob die Abtasteinheit oder der Untersuchungsbereich die Rotations- bzw. Translationsbewegung ausführt; wesentlich ist allein die Relativbewegung.

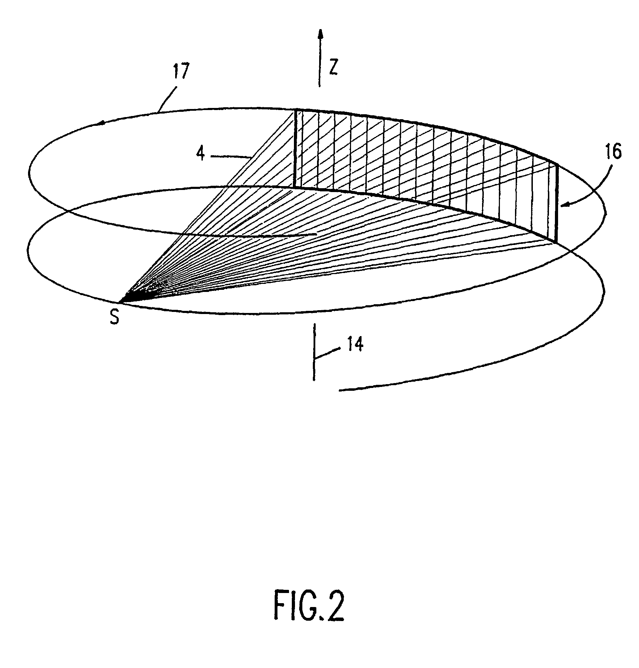

Deshalb ist bei Fig. 2 angenommen, dass sich die Strahlenquelle S (und die mit ihr über die Gantry verbundene Detektoreinheit 16) über die in Fig. 2 gezeigte helixförmige Bahn 17 bewegen, während der in Fig. 2 nicht dargestellte Untersuchungsbereich 13 (bzw. das Objekt darin) ruht. Das von S emittierte kegelförmige Strahlenbündel 4 trifft auf die jenseits des Untersuchungsbereichs angeordnete Detektoreinheit 16. Das kegelförmige Strahlenbündel 4 ist so dargestellt, als enthielte es in einer Vielzahl von zur Rotationsachse 14 (bzw. zur z-Richtung) parallelen Ebenen je einen Strahlenfächer. Alle diese ebenen Strahlenfächer gehen von der jeweiligen Position der Strahlenquelle S aus bzw. schneiden sich in dieser Position.

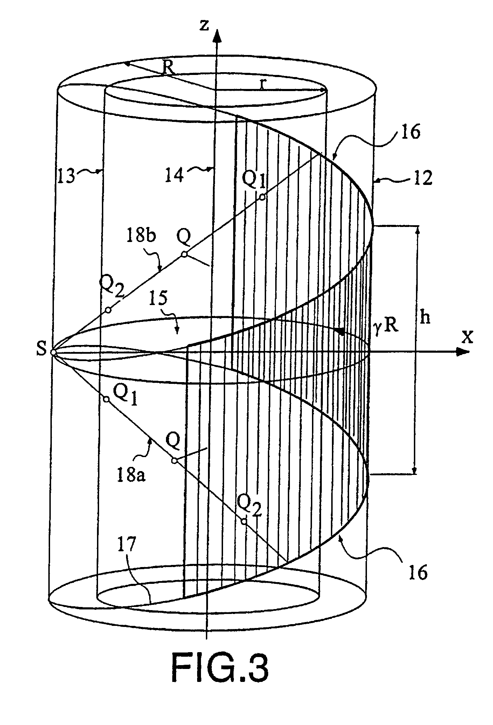

Fig. 3 zeigt in perspektivischer Darstellung die durch den Punkt, von dem die Strahlung ausgeht, symbolisierte Strahlenquelle S, die Detektoreinheit 16 und den zylinderförmigen Untersuchungsbereich 13 mit dem Radius r. Außerdem ist ein den Untersuchungsbereich 13 konzentrisch umschließender Zylinder 12 mit dem Radius R dargestellt, auf dem sich die helixförmige Abtastbahn (17 in Fig. 2) befindet und der nachstehend daher auch als Helix-Zylinder bezeichnet wird. Die Detektoreinheit 16, die aus einem Mosaik von Detektorelementen besteht, wie dies in Fig. 1 angegeben ist, die in Spalten (parallel zu der Drehungsachse 14) und Reihen vorgesehen sein können, liegt auf dem Umfang des Helix-Zylinders 12 zwischen zwei aufeinanderfolgenden Windungen der Helix 12; wobei die Größe in der z-Richtung auf diese Weise der Steigung h der Windungen der Helix entspricht. Dabei ist angenommen, dass die Strahlenquelle S und die Detektoreinheit 16 ruhen, während sich der Untersuchungsbereich 13 mit dem Objekt darin in Richtung der Rotationsachse 14 verschiebt und gleichzeitig um diese Rotationsachse 14 im Gegenuhrzeigersinn rotiert; der Zylinder 13 würde sich also nach oben aus dem Helix-Zylinder 12 herausschieben.

In Fig. 3 sind außerdem zwei Strahlen 18a und 18b eingezeichnet, die den unteren bzw. oberen Rand der Detektoreinheit treffen und den Rand des Untersuchungsbereichs 13 an den Punkten Q₁ und Q₂ durchstoßen. Der zwischen diesen Punkten auf dem Strahl befindliche Punkt Q ist derjenige Punkt auf dem Strahl, der den geringsten Abstand von der Rotationsachse 14 aufweist. Die Strahlen 18a und 18b treffen die Punkte Q₁-Q-Q₂ bei deren Eintritt in den Strahlenkegel und beim Verlassen des Strahlenkegels. Sie werden also zu unterschiedlichen Zeitpunkten von der Detektoreinheit erfasst.

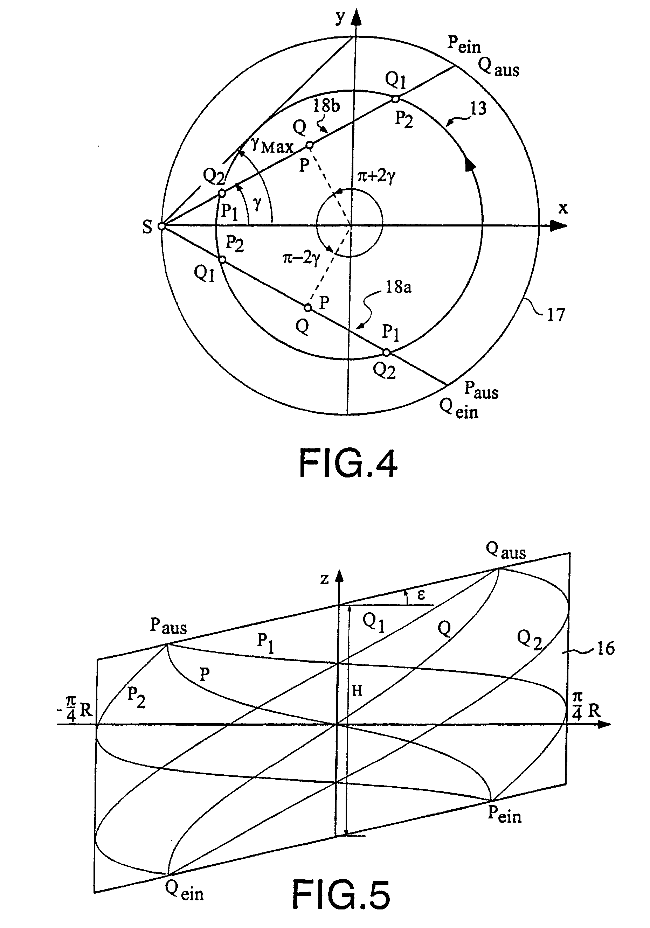

Fig. 4 zeigt die Anordnung nach Fig. 3 von oben, d.h. in einer Ansicht parallel zur z- Achse bzw. zur Rotationsachse 14. Der Öffnungswinkel γₘₐₓ des Strahlenkegels in Richtung der x-y - Ebene beträgt hierbei 45°, was gleichbedeutend damit ist, dass der Radius r=R/√2 ist. Der Radius r kann aber auch größer sein als R/√2 (aber stets kleiner als R) oder - wie in Fig. 1 dargestellt - kleiner.

Die Projektion der beiden Strahlen 18a und 18b auf die x-y - Ebene schließt mit der x-Achse, d. h. einem von S ausgehenden Strahl durch die Rotationsachse 14, einen Winkel γ ein. Der untere Strahl 18a geht in den oberen Strahl 18b über, nachdem sich der Untersuchungsbereich 13 um den Winkel π+2γ gedreht und proportional dazu in z-Richtung verschoben hat. Während aber beim Eintritt in den Strahlenkegel der Punkt Q₁ zwischen der Strahlenquelle S und Q₂ liegt, ist es beim Austritt genau umgekehrt.

Das bedeutet, die Punkte Q₁ und Q₂ und alle anderen Punkte auf der Geraden durch Q₁ und Q₂ sind über einen Winkelbereich von genau 180° - vom jeweiligen Punkt aus gesehen - bestrahlt bzw. auf die Detektoreinheit 16 projiziert worden. Eine Linie mit Punkten, die in dieser Weise gleichzeitig in den Untersuchungsbereich 13 eintritt und gleichzeitig aus ihm austritt, wird im folgenden als π-Linie bezeichnet. Die Linie 18 in Fig. 3 und Fig. 4 ist eine solche π-Linie, und es ist klar, dass eine π-Linie eine Linie ist, die zwei Punkte auf der gleichen Windung der helixförmigen Abtastbahn 17 verbindet. Es lässt sich zeigen, dass jeder Punkt im Untersuchungsbereich zu einer - und nur einer - π-Linie gehört. Daher wird jeder Punkt - von diesem Punkt aus gesehen -über einen Winkelbereich von 180° bestrahlt. Dies ist hinreichend - und notwendig - um jeden Punkt innerhalb des Untersuchungsbereichs 13, der in den Strahlenkegel ein- und wieder ausgetreten ist, rekonstruieren zu können. Die Detektoreinheit 16 liefert somit die zur exakten Rekonstruktion erforderlichen Messwerte, aber keine redundanten Messwerte, was die Rekonstruktion erheblich vereinfacht.

Fig. 5 stellt die Abwicklung einer Detektoreinheit 16 von dem Helix-Zylinder 12 in die Zeichenebene dar. Die Abwicklung hat die Form eines Parallelogramms mit zur z-Richtung parallelen Seiten, während die obere und untere Seite mit der Rotationsachse entsprechend der Steigung der Helix einen Winkel ε einschließen, der sich aus der Beziehung tanε=h/2πR berechnen lässt. Dabei ist angenommen, dass die Translations- und Rotationsgeschwindigkeit (bzw. die Winkelgeschwindigkeit) konstant sind und dass in der gleichen Zeit, in der in z- Richtung ein Vorschub um die Strecke h erfolgt, eine volle Umdrehung um die Rotationsachse 14 ausgeführt wird.

Während ein Punkt den Strahlenkegel passiert, ändert seine Projektion auf die Detektoreinheit 16 fortlaufend ihre Lage. Beginnend am unteren Rand (bzw. bei der unteren Detektorzeile) der Detektoreinheit beschreibt er eine Kurve auf der Detektoreinheit, die am oberen Rand endet. In Fig. 5 sind die Kurven für die Punkte Q₁, Q und Q₂ dargestellt. Außerdem zeigt Fig. 5 noch die Kurven für die Punkte auf einer anderen π-Linie mit den Punkten P₁, P, P₂, deren Projektion in z- Richtung beim Eintritt (d.h. wenn deren Verbindungsgerade mit der Strahlenquelle den unteren Rand der Detektoreinheit - vgl. Fig. 3 - schneidet) in das Strahlenbündel mit dem oberen Strahl 18b in Fig. 4 zusammenfällt. Diese Punkte liegen dichter bei der Strahlenquelle S als die Punkte Q₁-Q-Q₂ während ihrer Passage durch den Strahlenkegel, und sie passieren den Strahlenkegel während einer Rotation um den Winkel π-2γ um die Rotationsachse 14. Gleichwohl "sehen" auch diese Punkte bei ihrer Passage durch den Strahlenkegel 4 die Strahlenquelle S aus einem Winkel von genau 180°. Je größer die Entfernung zwischen zwei Punkten auf der gleichen π-Linie ist, desto größer ist die Abweichung zwischen den beiden Kurven, die diese Punkte auf dem Detektor beschreiben.

Die Abwicklung der Detektoreinheit muss nicht notwendigerweise die in Fig. 5 dargestellte Parallelogrammform haben. Es könnte auch ein größerer, z.B. rechteckiger Detektor verwendet werden, wenn der Kollimator 3 (Fig.1) das kegelförmige Strahlenbündel der Strahlenquelle S so begrenzt, dass die Abwicklung des von dem Strahlenbündel getroffenen Bereichs der Detektoreinheit genau die in Fig. 5 dargestellte Form hat. Statt dieser Maßnahme - oder in Kombination damit - können die Messdaten von denjenigen Detektorelementen des Detektors unberücksichtigt bleiben, die sich auf dem Detektor außerhalb des Parallelogramms nach Fig. 5 befinden.

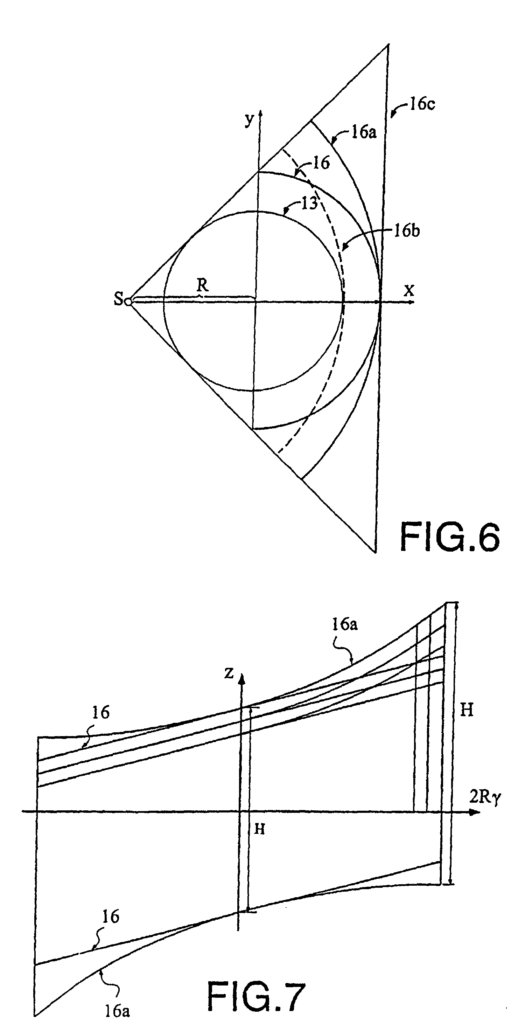

Es ist auch nicht erforderlich, dass sich die Detektorelemente auf dem Umfang des Helix-Zylinders 12 (Fig. 3) befinden. Wie in Fig. 6 angedeutet, die eine Parallelprojektion der Anordnung nach Fig.3 in Richtung der z-Achse schematisch darstellt, kann die Detektoreinheit auch einen helixförmigen Kreisbogen 16b bzw. 16a um die Strahlenquelle S beschreiben, der den Untersuchungsbereich 13 tangiert bzw. den Helix-Zylinder. Ebenso kann die Detektoreinheit auch eine ebene Fläche 16c aufweisen oder beliebig geformt sein. Wesentlich ist bei all diesen Varianten nur, dass die Ränder der Detektoreinheit (bzw. der jeweils vom Strahlenbündel 4 getroffene Bereich der Detektoreinheit) mit der Zentralprojektion zweier im Abstand h befindlicher Wendelabschnitte der helixförmigen Abtastbahn 17 zusammenfällt bzw. dass jeder Punkt bei seiner Passage die Strahlenquelle in einem Winkelbereich von genau 180° sieht.

Fig. 7 zeigt demgemäß die Abwicklungen der den Helix-Zylinder 12 auf einem Kreisbogen um die Strahlenquelle tangierenden Detektoreinheiten 16 und 16a in die Zeichenebene. Man erkennt, dass sich die Höhe dieser Abwicklung, d.h. die Abmessung in Richtung der z-Achse, - und in gleicher Weise die Abmessungen der Detektorzeilen - ändern, und zwar nach der Funktion h/cosγ, wobei γ der Winkel ist, den die Projektion eines Strahles in die x-y -Ebene mit der z-Achse einschließt (vgl. z.B. Fig. 4).

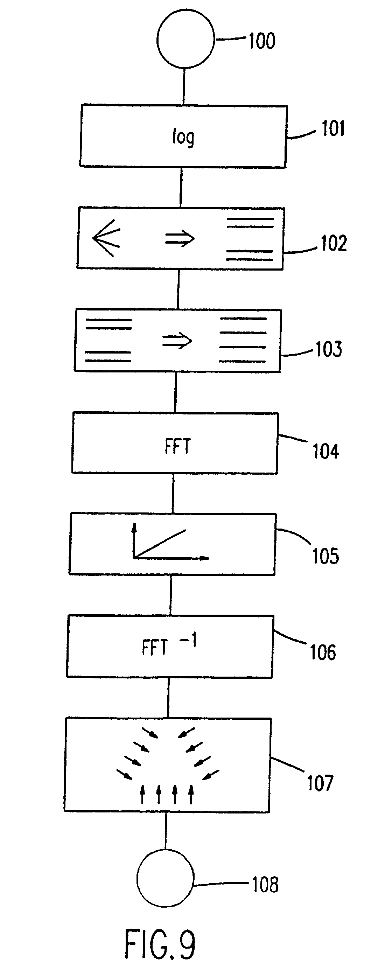

Im Folgenden wird erläutert, wie die von der mehrzeiligen Detektoreinheit 16 akquirierten Daten in dem Bildverarbeitungsrechner 10 weiterverarbeitet werden, wozu auf das in Fig. 9 dargestellte Ablaufdiagramm Bezug genommen wird. Nach der Initialisierung (Block 100) wird zunächst jeder Messwert von jedem Detektorelement durch einen Referenzwert dividiert, und der daraus resultierende Quotient wird logarithmiert. Die auf diese Weise entstehenden Messdaten stellen das Linienintegral der Absorption der Strahlung längs eines die Strahlenquelle mit dem jeweiligen Detektorelement verbindenden Strahls dar. Es ist dann Aufgabe der nachfolgenden Verarbeitungsschritte, aus diesen Linienintegralen der Absorption die räumliche Verteilung der Absorption zu bestimmen.

Dazu erfolgt zunächst ein Rebinning. Nach dem Rebinning oder auch davor erfolgt eine Gewichtung der Messdaten, indem die Messdaten mit einem Faktor multipliziert werden, der dem Kosinus des Winkels der zu den Messdaten gehörenden Strahlen (z.B.18) mit einer die Rotationsachse senkrecht schneidenden Ebene entspricht. Dieser Gewichtungs-Schritt kann aber in den Fällen entfallen, in denen der Abstand zweier Helixwindungen klein im Vergleich zu deren Radius ist. Deshalb ist dieser Schritt in Fig. 9 nicht gesondert dargestellt.

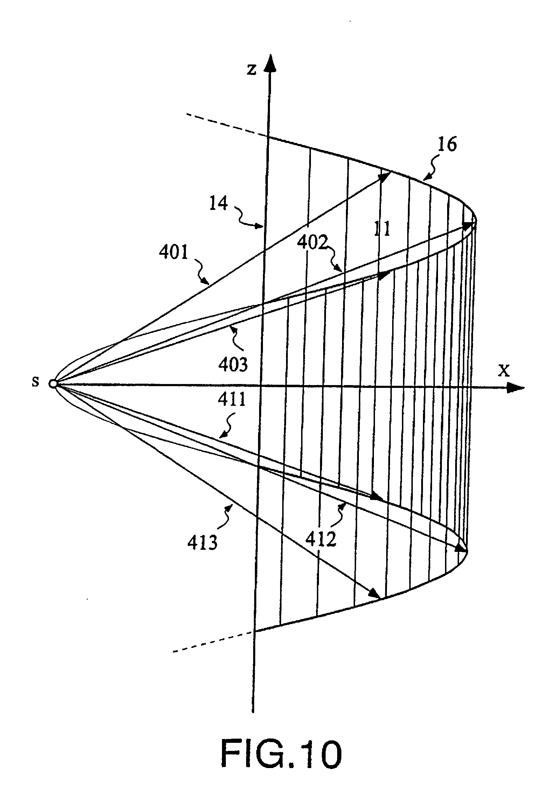

Bei dem Rebinning werden, in einem ersten Schritt 102, Gruppen von in zueinander und zur Rotationsachse 14 parallelen Ebenen liegenden Strahlenfächern bzw. von Messdaten gebildet, die zu den Strahlen gehören, aus denen sich diese Strahlenfächer zusammensetzen. Dies wird zunächst anhand von Fig. 10 erläutert, die eine Seitenansicht der Anordnung nach Fig. 3 darstellt. Fig. 10 zeigt sechs Strahlen von dem kegelförmigen Strahlenbündel 4, wovon drei Strahlen 401...403 den oberen Rand und drei Strahlen 411...413 den unteren Rand der Detektoreinheit treffen. Die Strahlen 402 und 412 gehen dabei durch die Rotationsachse 14, während die Strahlen 401 und 403 bzw. 411 und 413 links bzw. rechts an der Rotationsachse vorbeigehen. Jeweils zwei dieser Strahlen sind die Randstrahlen eines Strahlenfächers, dessen Strahlen in einer zur z-Achse bzw. zur Rotationsachse 14 parallelen Ebene liegen, z.B. die Strahlen 401 und 411, die Strahlen 402 und 412 und die Strahlen 403 und 413.

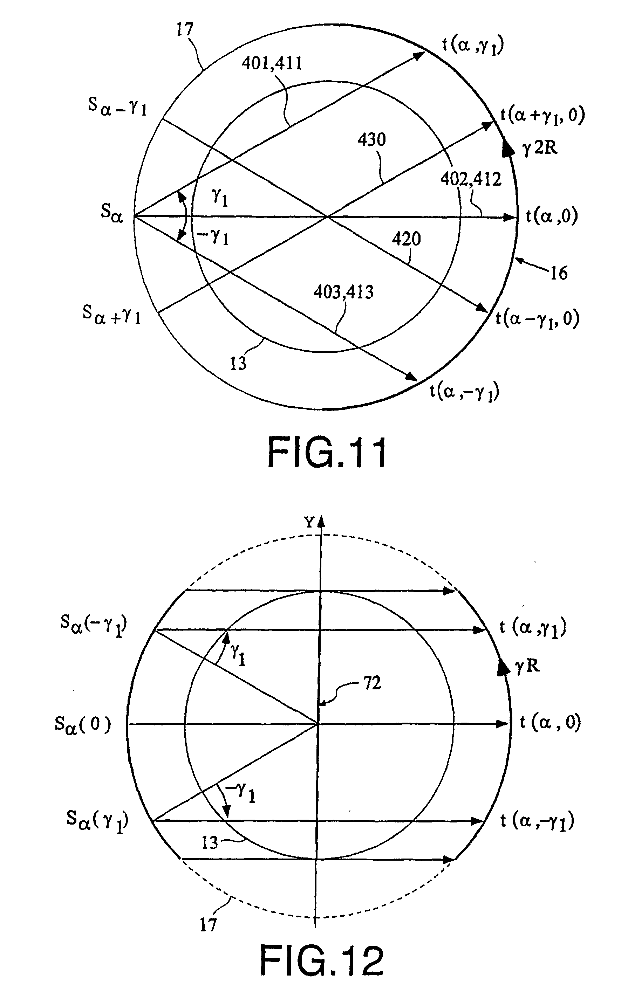

Fig. 11 zeigt eine Draufsicht auf die Anordnung nach Fig. 10. Da die Strahlen 401 ...403 und 411...413 jeweils in der gleichen, zur Zeichenebene der Fig. 11 senkrechten Ebene liegen, erscheinen sie in Fig. 11 als einzelner Strahl. Die durch diese Strahlenfächer definierten Ebenen schneiden sich in der Strahlenquellenposition S_{α}. Die Ebene mit den Strahlenfächern 401, 411 schließt mit der die Rotationsachse enthaltenden Mittelebene einen Winkel +γ₁ ein, während zwischen der Mittelebene und der Ebenen des Strahlenfächers 403,413 ein Winkel -γ₁ liegt. Der Strahlenfächer 402, 412 ist mit der Mittelebene (in Fig. 11 ist das die x-z-Ebene) identisch.

In Fig. 11 sind zwei weitere Strahlenquellenpositionen S_{α-γ1} und S_{α+γ1} beiderseits der mittleren Strahlenquellenposition S_{α} dargestellt und je ein Strahlenfächer, der von dieser Strahlenposition ausgehend die Rotationsachse 14 mit den Strahlenfächern 420 bzw. 430 durchsetzt. Man erkennt, daß die Strahlenfächer 420 und 403, 413 zueinander parallel sind, genauso wie die Strahlenfächer 401, 411 und 430. Bei der Erfindung werden im Schritt 102 aus verschiedenen Strahlenquellenpositionen die Strahlenfächer, die in zueinander (und zur Rotationsachse 14) parallelen Ebenen liegen - bzw. die Messdaten, die zu den Strahlen gehören, aus denen sich diese Strahlenfächer zusammensetzen - zu jeweils einer Gruppe zusammengefasst. Es werden somit diejenigen Strahlenfächer (und die zugehörigen Messdaten) in einer Gruppe zusammengefasst, bei denen die Summe aus dem die Strahlenquellenposition kennzeichnenden Winkel (α, bzw. α-γ₁ bzw. α+γ₁) und dem Fan-Winkel γ (das ist der Winkel, den die Ebene des Strahlenfächers mit einer die Rotationsachse 14 enthaltenden Ebene einschließt; in Fig. 11 sind dies z.B. die Winkel -γ₁, bzw. + γ₁) konstant ist.

In der Praxis gibt es nur diskrete Werte des Winkels α der Strahlenquellenpositionen bzw. - bedingt durch die endlichen Abmessungen der Detektorelemente - des Fan-Winkels γ. Diese diskreten Werte unterscheiden sich durch Inkremente dα bzw. dγ voneinander, wobei dα ≠ dγ sein kann. Infolge dieser Ungleichheit kann die Summe dieser beiden Winkel bei verschiedenen Strahlenquellenposition nicht immer exakt den gleichen Wert haben; es kann Strahlenfächer geben, bei denen die Summe etwas größer oder etwas kleiner ist als der zur mittleren Strahlenquellenposition S_{α} gehörende Winkel α, d. h. die zugehörigen Strahlenfächer befinden sich nicht in parallelen Ebenen. In diesem Fall kann man durch Interpolation der zu diesen ursprünglichen Strahlenfächern mit einem leicht abweichenden Winkel α gehörenden Messdaten die Messdaten eines Strahlenfächers ermitteln, der in einer exakt parallelen Ebene liegt, bzw. für den die Summe exakt α ist.

Fig. 12 zeigt eine solche Schar von in verschiedenen Strahlenquellenpositionen erzeugten, in parallelen Ebenen befindlichen Strahlenfächern, die den Untersuchungsbereich 13 durchsetzen. Senkrecht zu den Ebenen, in denen sich diese Strahlenfächer befinden, und in der Rotationsachse ist ein virtueller Detektor 72 angeordnet. Die Abmessungen dieses virtuellen Detektors in der x-y-Ebene entsprechen dem Durchmesser des Untersuchungsbereichs 13 (2r). In z-Richtung betragen die Abmessungen des virtuellen Detektors h/2. Es läßt sich nämlich zeigen, daß die oberen und unteren Randstrahlen sämtlicher Strahlenfächer exakt mit dem (in z-Richtung) oberen bzw, unteren Rand dieses ebenen, virtuellen und exakt rechteckigen Detektors zusammenfallen.

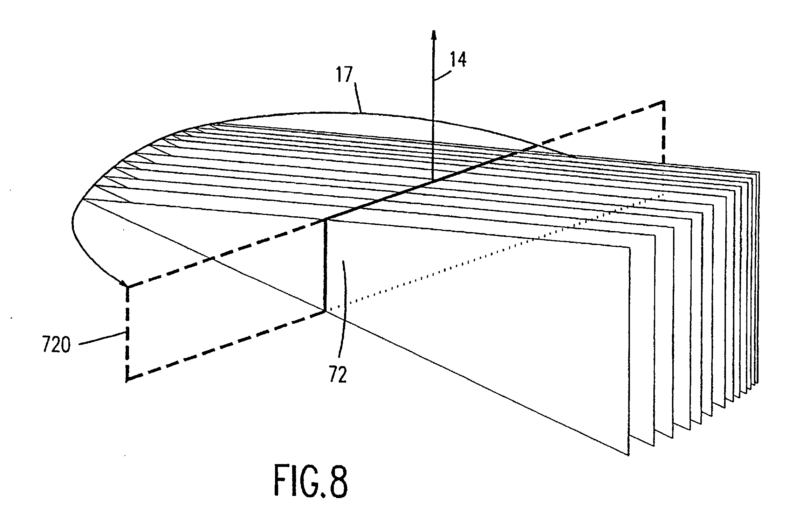

Fig. 8 erläutert die Verhältnisse in einer perspektivischen Darstellung, wobei angenommen ist, dass sich die Strahlenquelle auf der helixförmigen Bahn 17 bewegt. Die obere und die linke Seite des virtuellen Detektors 72 sind durch ausgezogene Linien dargestellt, während die untere Seite durch eine gepunktete Linie dargestellt ist. Der obere und untere Rand des virtuellen Detektors 72 ist durch gestrichelte Linien 72 verlängert und zu einem Rechteck 720 ergänzt, von dessen unterem rechten Eckpunkt die helixförmige Bahn 17 bis zu dessen oberem Eckpunkt verläuft. Die von verschiedenen Strahlenquellenpositionen auf der helixförmigen Bahn ausgehenden und in zueinander parallelen Ebenen verlaufenden Strahlenfächer sind als Dreiecke dargestellt, deren obere und untere Seite den oberen und unteren Randstrahl des Strahlenfächers andeuten sollen und dessen vertikale Seite die Lage der von diesem Strahlenfächer getroffenen Spalte der Detektoreinheit darstellen soll.

Obwohl die Strahlenquellenposition links und rechts von der Mitte höher bzw. tiefer (in Richtung der Rotationsachse gemessen) liegen als die mittlere Strahlenquellenposition, durchstoßen die oberen und unteren Randstrahlen den oberen und den unteren Rand des ebenen virtuellen Detektors 72. Dies beruht darauf, dass die rechts bzw. links von der Mitte befindlichen Strahlenfächer von Detektorspalten erfasst werden, die in z-Richtung höher bzw. niedriger liegen als die Spalte, die den von der mittleren Strahlenquellenposition ausgehenden, die Rotationsachse 14 durchsetzenden Strahlenfächer erfasst.

Aus dem Vorstehenden wird deutlich, dass jeder Strahlenfächer eine Spalte des virtuellen Detektors bedeckt. Im Schritt 102 werden alle (in zur Rotationsachse parallelen Ebenen befindlichen) Strahlenfächer je einer der verschiedenen Gruppen zugeordnet, so dass sich - ggf. nach Interpolation - innerhalb jeder Gruppe die Strahlenfächer in parallelen Ebenen befinden, die den zu dieser Gruppe gehörenden virtuellen Detektor 72 senkrecht schneiden.

Nachdem auf diese Weise für wenigstens eine Gruppe alle Messdaten und die zugehörigen Strahlenfächer erfasst worden sind, erfolgt im Schritt 103 der zweite Teil des Rebinning. Dies ist ein weiteres Interpolationsverfahren, das aus den folgenden Gründen nötig ist: Die Strahlenfächer belegen zwar einen vertikalen Streifen bzw. eine Spalte in dem virtuellen Detektor, und die zu einem Strahlenfächer gehörenden Strahlen können an äquidistanten Punkten auf den virtuellen Detektor auftreffen, aber die Spalten bzw. vertikalen Streifen haben voneinander unterschiedliche Abstände (aus geometrischen Gründen sind sie außen dichter beieinander als innen). Deshalb werden im Schritt 103 die nach dem Schritt 102 gelieferten Daten so interpoliert, dass sich für ein regelmäßiges kartesisches Gitter auf dem virtuellen Detektor die zugehörigen Strahlen und die zugehörigen Linienintegrale der Absorption ergeben. Damit ist ein Rebinning mit einer parallelen Fächergeometrie auf eine rechteckige Detektorfläche mit regelmäßig verteilten Gitterpunkten erfolgt, was die nachfolgende Verarbeitung ganz wesentlich erleichtert.

Das in den Schritten 102 und 103 erfolgte Rebinning liefert somit Gruppen von Messdaten und die zugehörigen Strahlen, die sich ergeben würden, wenn ein ebener rechteckiger Detektor in einer die Rotationsachse 14 enthaltenden Ebene (d.h. der virtuelle Detektor) die Messdaten einer sich entlang eines Abschnitts der Linie 17 erstreckenden Strahlenquelle erfassen würde, die zur Detektorebene senkrechte und zur Rotationsachse 14 parallele Strahlenfächer emittiert.

Anschließend erfolgt im Schritt 104 eine eindimensionale Filterung. Bei dem vorgegebenen Rebinning ist dafür lediglich ein einfaches eindimensionales ortsunabhängiges, vorzugsweise rampenförmiges Filter in Zeilenrichtung erforderlich (die Zeilenrichtung verläuft in der Darstellung der Fig. 12 vertikal bzw. in der perspektivischen Darstellung der Fig. 8 in Längsrichtung des Rechtecks 720 bzw. 72 und somit senkrecht zur Rotationsachse 14). Die Filterung kann im Prinzip dadurch erfolgen, dass die sich aus dem Rebinning ergebenden Daten einer Faltung mit einem geeigneten eindimensionalen Filterkernel unterzogen werden.

Eine einfachere Möglichkeit besteht jedoch darin, die durch das Rebinning entstandenen Daten im Schritt 104 zunächst einer Fourier-Transformation zu unterziehen. Im Schritt 105 werden die auf diese Weise in den Ortsfrequenzraum transformierten Daten einer rampenförmigen Filterung (in Zeilenrichtung) unterzogen, wobei die Dämpfung linear mit zunehmendem Betrag der Frequenz abnimmt. Im Schritt 106 werden die auf diese Weise im Ortsfrequenzraum gefilterten Daten einer inversen Fourier-Transformation unterzogen, so dass sich gefilterte Projektionsdaten ergeben.

Es ist nicht wesentlich, dass der virtuelle Detektor, der dem Rebinning zugrundegelegt wird, eben ist und die Rotationsachse enthält. Wenn diese Voraussetzungen nicht gegeben sind, beschreiben die Durchstoßpunkte der einzelnen Strahlen mit dem (virtuellen) Detektor nicht mehr zur Rotationachse senkrechte Geraden, sondern - ggf. gekrümmte - Geraden. In diesem Fall müssen für die Filterung die Messdaten herangezogen werden, die innerhalb der zur gleichen Gruppe gehörenden Strahlenfächer den einander entsprechenden (z.B. den jeweils obersten, den zweitobersten .....den untersten ) Strahlen zugeordnet sind.

Im nächsten Verfahrensschritt 107 werden die gefilterten Daten einer jeden Gruppe entlang den aus dem Rebinning resultierenden Strahlen in den Ortsraum rückprojiziert. Die gefilterten Daten werden also den Voxeln im Untersuchungsbereich zugeordnet (d.h. sie werden auf diese Voxel "verschmiert"), die bei der Akquisition von dem zugehörigen Strahl getroffen wurden. Jedes Voxel erhält auf diese Weise Beiträge von verschiedenen Gruppen von Strahlen (bzw. den zugehörigen Daten), die bezüglich dieses Voxels einen Winkel von 180° miteinander einschließen.

Dabei ergibt sich bereits eine vollständige Rekonstruktion eines Teils des Untersuchungsbereichs, sobald die Messdaten, die sich bei einem Umlauf der Abtasteinheit relativ zum Untersuchungsbereich über einen Winkel von 180° +2γₘₐₓ ergeben, entsprechend den Schritten 101-107 verarbeitet worden sind. Der auf diese Weise rekonstruierte Bereich kann unmittelbar danach schon auf dem Monitor wiedergegeben werden, wobei weiterhin Messdaten akquiriert und entsprechend den Schritten 101 bis 107 verarbeitet werden können. Die Akquisition der Messdaten und die Rekonstruktion der Absorptionsverteilung im Untersuchungsbereich kann dann zu einem beliebigen Zeitpunkt beendet werden (Block 108).

## Patentansprüche

1. Computertomographie-Verfahren mit helixförmiger Abtastung eines Untersuchungsbereiches durch eine Abtasteinheit, die eine ein kegelförmiges Strahlenbündel emittierende Strahlenquelle (S) und eine Detektoreinheit (16) umfaßt, wobei ein in dem Untersuchungsbereich (13) enthaltenes Objekt und die Abtasteinheit relativ zueinander gleichzeitig um eine Rotationsachse (14) rotieren und eine zur Richtung der Rotationsachse parallele Bewegung ausführen, so dass sich eine Relativbewegung in Form einer Helix (17) ergibt, und mit einer Rekonstruktion der räumlichen Verteilung der Absorption innerhalb des Untersuchungsbereiches aus den von der Detektoreinheit akquirierten Messdaten,
wobei dieses Verfahren die nachfolgende Schritte umfasst:
a) Verwendung lediglich solcher Messdaten für die Rekonstruktion, die sich ergeben von Strahlen, die genau durch das Gebiet zwischen zwei benachbarten Windungen der Helix gehen, wobei die Punkte innerhalb des Untersuchungsbereiches in einem Winkelbereich von genau 180° bestrahlt werden - von dem jeweiligen Punkt selber aus gesehen,
b) Rebinning (102) der Messdaten und der zugehörigen Strahlen zu einer Anzahl von Gruppen, wobei jede Gruppe mehrere zueinander und zur Rotationsachse parallele Ebenen umfasst und sich in jeder Ebene ein Strahlenfächer befindet,
c) Filterung (104,105,106) der durch das Rebinning erzeugten Daten einer jeden Gruppe, wobei die Daten in jeder Gruppe in Form von Strahlenfächern in zueinander und zur Rotationsachse parallelen Ebenen vorliegen,
d) Rekonstruktion der räumlichen Verteilung der Absorption durch Rückprojektion (107) der gefilterten Daten verschiedener Gruppen.

2. Computertomographie-Verfahren nach Anspruch 1
**dadurch gekennzeichnet, dass** die Filterung folgende Schritte umfasst:
a) eindimensionale Fourier-Transformation der Daten einer jeden Gruppe in Richtung senkrecht zur Rotationsachse,
b) Anwendung eines rampenförmigen Filters auf die aus der Fourier-Transformation resultierenden Werte,
c) inverse Fourier-Transformation der gefilterten Daten.

3. Computertomographie-Verfahren nach Anspruch 1,
**dadurch gekennzeichnet, dass** das Rebinning auf je einen zu den Ebenen einer jeden Gruppe senkrechten, ebenen virtuellen Detektor erfolgt, der die Rotationsachse enthält.

4. Computertomograph zur Durchführung des Verfahrens nach Anspruch 1 mit einer Abtasteinheit, die eine Strahlenquelle (S) zur Emission eines kegelförmigen Strahlenbündels und eine damit verbundene Detektoreinheit (16) umfasst, mit einer Antriebsanordnung (2,5), um ein im Untersuchungsbereich (13) enthaltenes Objekt und die Abtasteinheit relativ zueinander gleichzeitig um eine Rotationsachse (14) rotieren und in Richtung der Rotationsachse eine Bewegung ausführen zu lassen, sodaß sich eine Relativbewegung in Form einer Helix (17) ergibt,
und mit einer Rekonstruktionseinheit (10) zur Rekonstruktion der räumlichen Verteilung der Absorption innerhalb des Untersuchungsbereiches aus den von der Detektoreinheit akquirierten Messdaten,
wobei der Computertomograph die nachfolgenden Mittel umfasst:
a) Mittel zur Verwendung lediglich solcher Messdaten für die Rekonstruktion, die sich von Strahlen ergeben, die genau durch das Gebiet zwischen zwei benachbarten Windungen der Helix gehen, wobei die Punkte innerhalb des Untersuchungsbereiches in einem Winkelbereich von genau 180° bestrahlt werden - von dem jeweiligen Punkt selber aus gesehen,
b) Mittel zum Rebinning der Messdaten zu mehreren Gruppen, wobei jede Gruppe mehrere zueinander und zur Rotationsachse parallele Ebenen umfasst und sich in jeder Ebene ein Strahlenfächer befindet,
c) Mittel zur Filterung der durch das Rebinning erzeugten Daten einer jeden, Gruppe, wobei die Daten in jeder Gruppe in Form von Strahlenfächern in zueinander und zur Rotationsachse parallelen Ebenen vorliegen,
d) Mittel zur Rekonstruktion der räumlichen Verteilung der Absorption durch Rückprojektion der gefilterten Daten verschiedener Gruppen

5. Computertomograph nach Anspruch 4,
**gekennzeichnet durch** eine solche Gestaltung einer zwischen der Strahlenquelle (S) und dem Untersuchungsbereich (13) vorgesehenen Kollimatoranordnung (3) und/oder der Detektoreinheit (16), dass alle Verbindungsgeraden der Strahlenquelle mit den beiden in Richtung der Rotationsachse gegeneinander versetzten Rändern des vom kegelförmigen Strahlenbündel (4) getroffenen Bereichs der Detektoreinheit bzw. Rändern der Detektoreinheit zwei in Richtung der Rotationsachse benachbarte Abschnitte der Wendel der Helix schneiden, auf der die Strahlenquelle und das Objekt relativ zueinander bewegbar sind.

## Claims

1. A computer tomography method which involves helical scanning of an examination zone by means of a scanning unit which includes a radiation source (S), emitting a conical radiation beam, and a detector unit (16), an object present in the examination zone (13) and the scanning unit simultaneously rotating about an axis of rotation (14) relative to one another and performing a motion parallel to the direction of the axis of rotation, resulting in a relative motion in the form of a helix (17), and which also involves a reconstruction of the spatial distribution of the absorption within the examination zone from the measuring data acquired by the detector unit, which method includes the following steps:
a) using exclusively the measuring data for the reconstruction which is obtained from rays which pass exactly through the area of adjacent turns of the helix, the points within the examination zone being irradiated in an angular range of exactly 180° as seen from the relevant point itself,
b) rebinning (102) the measuring data and the associated rays so as to form a number of groups, each group comprising a plurality of planes which extend parallel to one another and to the axis of rotation and each of which contains a respective fan beam,
c) filtering (104, 105, 106) the data of each group, formed by the rebinning, the data in each group being present in the form of fan beams in planes extending parallel to one another and to the axis of rotation,
d) reconstructing the spatial distribution of the absorption by backprojection (107) of the filtered data of different groups.

2. A computer tomography method as claimed in Claim 2, **characterized in that** the filtering operation includes the following steps:
a) one-dimensional Fourier transformation of the data of each group in the direction perpendicular to the axis of rotation,
b) application of a ramp-like filter to the values yielded by the Fourier transformation,
c) inverse Fourier transformation of the filtered data.

3. A computer tomography method as claimed in Claim 1, **characterized in that** the rebinning is performed on a respective flat virtual detector which extends perpendicularly to the planes of each group and contains the axis of rotation.

4. A computer tomography apparatus for carrying out the method claimed in Claim 1, provided with a scanning unit which includes a radiation source (S) for the emission of a conical radiation beam and a detector unit (16) connected thereto, a drive device (2, 5) for simultaneously rotating an object present in the examination zone (13) and the scanning unit relative to one another about an axis of rotation (14) and for causing them to perform a motion in the direction of the axis of rotation, resulting in a relative motion in the form of a helix (17), and also with a reconstruction unit (10) for reconstructing the spatial distribution of the absorption within the examination zone from the measuring data acquired by the detector unit, the computer tomography apparatus including the following means:
a) means for using exclusively measuring data for the reconstruction which has been acquired from rays which pass exactly through the area between two adjacent turns of the helix, the points within the examination zone being irradiated from an angular range of exactly 180° as seen from the relevant point itself,
b) means for rebinning the measuring data so as to form a plurality of groups, each group containing a plurality of planes which extend parallel to one another and to the axis of rotation, a respective fan beam being situated in each plane,
c) means for filtering the data produced by the rebinning operation of each group, the data in each group being present in the form of fan beams in planes extending parallel to one another and to the axis of rotation,
d) means for the reconstruction of the spatial distribution of the absorption by backprojection of the filtered data of different groups.

5. A computer tomography apparatus as claimed in Claim 4, **characterized in** its collimator arrangement (3) and/or the detector unit (16), arranged between the radiation source (S) and the examination zone (13), is constructed in such a manner that all connecting lines between the radiation source and the two boundaries, mutually offset in the direction of the axis of rotation, of the area of the detector unit which is struck by the conical radiation beam (4), or the edges of the detector unit, intersect two segments of a turn of the helix which neighbour one another in the direction of the axis of rotation and along which the radiation source and the object are movable relative to one another.

## Revendications

1. Procédé de tomographie informatique qui implique le balayage hélicoïdal d'une zone d'examen au moyen d'un dispositif de balayage qui comporte une source de rayonnement (S), émettant un faisceau de rayonnement conique, et un détecteur (16), un objet présent dans la zone d'examen (13) et le dispositif de balayage tournant simultanément autour d'un axe de rotation (14) l'un par rapport à l'autre et exécutant un mouvement parallèle à la direction de l'axe de rotation, résultant en un mouvement relatif sous la forme d'une hélice (17), et qui implique également une reconstruction de la répartition spatiale de l'absorption dans la zone d'examen à partir des données de mesure acquises par le détecteur, procédé qui comporte les étapes suivantes :
a) l'utilisation exclusive des données de mesure pour la reconstruction qui sont obtenues par des rayons qui passent exactement dans la zone des tours adjacents de l'hélice, les points dans la zone d'examen étant irradiés selon une gamme angulaire de 180° exactement vue du point concerné lui-même,
b) l'opération de rebinning (102) des données de mesure et des rayons associés en vue de former un nombre de groupes, chaque groupe comportant une pluralité de plans qui se prolongent parallèlement les uns par rapport aux autres et à l'axe de rotation et dont chacun contient un faisceau en éventail respectif,
c) le filtrage (104, 105, 106) des données de chaque groupe, formées par l'opération de rebinning, les données dans chaque groupe étant présentes sous la forme de faisceaux en éventail dans des plans se prolongeant parallèlement les uns par rapport aux autres et à l'axe de rotation,
d) la reconstruction de la répartition spatiale de l'absorption par rétroprojection (107) des données filtrées des différents groupes.

2. Procédé de tomographie informatique selon la revendication 2, **caractérisé en ce que** l'opération de filtrage comporte les étapes suivantes :
a) la transformation de Fourier à une dimension des données de chaque groupe dans la direction perpendiculaire à l'axe de rotation,
b) l'application d'un filtre du type rampe aux valeurs produites par la transformation de Fourier,
c) la transformation de Fourier inverse des données filtrées.

3. Procédé de tomographie informatique selon la revendication 1, **caractérisé en ce que** l'opération de rebinning est effectuée sur un détecteur virtuel plat respectif qui se prolonge perpendiculairement aux plans de chaque groupe et contient l'axe de rotation.

4. Appareil de tomographie informatique destiné à effectuer le procédé revendiqué dans la revendication 1, équipé d'un dispositif de balayage qui comprend une source de rayonnement (S) pour l'émission d'un faisceau de rayonnement conique et un détecteur (16) qui y est connecté, un dispositif d'entraînement (2, 5) destiné à faire tourner simultanément un objet présent dans la zone d'examen (13) et le dispositif de balayage l'un par rapport à l'autre autour d'un axe de rotation (14) et destiné à leur faire faire un mouvement dans la direction de l'axe de rotation, résultant en un mouvement relatif en forme d'hélice (17), et aussi équipé d'un dispositif de reconstruction (10) destiné à reconstruire la répartition spatiale de l'absorption dans la zone d'examen à partir des données de mesure acquises par le détecteur, l'appareil de tomographie informatique comportant les moyens suivants :
a) des moyens destinés à l'utilisation exclusive des données de mesure pour la reconstruction qui ont été obtenues par des rayons qui passent exactement dans la zone entre deux tours adjacents de l'hélice, les points dans la zone d'examen étant irradiés selon une gamme angulaire de 180° exactement vue du point concerné lui-même,
b) des moyens destinés à l'opération de rebinning des données de mesure afin de former une pluralité de groupes, chaque groupe contenant une pluralité de plans qui se prolongent parallèlement les uns par rapport aux autres et à l'axe de rotation, un faisceau en éventail respectif étant situé dans chaque plan,
c) des moyens destinés au filtrage des données produites par l'opération de rebinning de chaque groupe, les données dans chaque groupe étant présentes sous la forme de faisceaux en éventail dans des plans se prolongeant parallèlement les uns par rapport aux autres et à l'axe de rotation,
d) des moyens destinés à la reconstruction de la répartition spatiale de l'absorption par rétroprojection des données filtrées des différents groupes.

5. Appareil de tomographie informatique selon la revendication 4, **caractérisé en ce que** la disposition de son collimateur (3) et/ou du détecteur (16), disposé entre la source de rayonnement (S) et la zone d'examen (13), est construite de telle manière que toutes les lignes de connexion entre la source de rayonnement et les deux limites, décalées mutuellement dans la direction de l'axe de rotation, de la zone du détecteur qui est frappée par le faisceau de rayonnement conique (4), ou les bords du détecteur, croisent deux segments d'un tour de l'hélice qui s'avoisinent l'un l'autre dans la direction de l'axe rotation et où la source de rayonnement et l'objet sont mobiles l'un par rapport à l'autre.
